# EUROPÄISCHE PATENTSCHRIFT

(11) **EP 2 974 947 B1**
(45) Veröffentlichungstag und Bekanntmachung des Hinweises auf die Patenterteilung: **29.05.2019**
(21) Anmeldenummer: 15175702.8
(22) Anmeldetag: 07.07.2015
(51) Int. Cl.: B62J 1/08, B62K 19/36

(54) **FAHRRADRAHMENELEMENT**
BICYCLE FRAME ELEMENT
ÉLEMENT DE CADRE DE VELO

(30) Priorität: 17.07.2014 DE 202014005836 U
(43) Veröffentlichungstag der Anmeldung: 20.01.2016
(73) Patentinhaber: Canyon Bicycles GmbH, 56073 Koblenz (DE)
(72) Erfinder: Wagner, Lars, 64367 Mühltal (DE)
(74) Vertreter: dompatent von Kreisler Selting Werner - Partnerschaft von Patent- und Rechtsanwälten mbB

(56) Entgegenhaltungen:
- CH-A- 173 959
- DE-U1-202007 009 949
- DE-U1-202007 015 382
- FR-A1- 2 579 948
- FR-A1- 2 855 489
- FR-A3- 2 581 952
- JP-Y1- S4 513 547
- NL-A- 8 400 540
- US-A- 3 849 008
- US-A- 4 417 744
- US-A1- 2007 132 203
- US-A1- 2011 042 543

## Beschreibung

Die Erfindung betrifft ein Fahrradrahmenelement, bei dem es sich insbesondere um einen Teil eines Rennrades oder Triathlon-Rades handelt. Ferner betrifft die Erfindung eine Halteeinrichtung zur Fixierung einer Sattelstütze in einem Sitzrohr eines Fahrradrahmens, insbesondere eines derartigen Fahrradrahmenelements. Des Weiteren betrifft die Erfindung einen Fahrradrahmen.

Herkömmliche Sattelstützen werden im Sitzrohr eines Fahrradrahmens durch eine Klemmschelle fixiert. Hierzu weist das Sitzrohr im oberen Endbereich einen Längsschlitz auf und ist von der Klemmschelle umgeben. Ferner ist es zur Fixierung der Sattelstütze im Sitzrohr bekannt, anstelle einer Sattelschelle innerhalb des Sitzrohrs ein keilartiges Element vorzusehen, das mit Hilfe einer Klemmschraube gegen die Sattelstütze gedrückt wird. Hierdurch erfolgt ein klemmendes Fixieren der Sattelstütze im Sitzrohr.

Aufgabe der Erfindung ist es, ein Fahrradrahmenelement zu schaffen, durch das eine verbesserte Klemmung der Sattelstütze im Sitzrohr möglich ist. Eine weitere Aufgabe der Erfindung besteht darin, einen Fahrradrahmen zu schaffen, der ein derartiges Fahrradrahmenelement aufweist.

JP S45 13547 Y1 beschreibt ein Fahrradelement gemäß dem Oberbegriff von Anspruch 1, bei dem durch ein Klemmmittel eine Klemmkraft auf ein Klemmelement wirkt, wodurch die Sattelstütze vertikal fixiert wird.

FR 2 579 948 A1 beschreibt ein Fahrradrahmenelement, bei dem durch ein Klemmmittel und ein Klemmelement eine Klemmkraft auf die Fahrradsattelstütze wirkt und somit eine Höhenfixierung erreicht wird.

Die Lösung der Aufgabe erfolgt durch ein Fahrradrahmenelement gemäß Anspruch 1, sowie einen Fahrradrahmen gemäß Anspruch 8. Das erfindungsgemäße Fahrradrahmenelement weist ein Sitzrohr auf. Insbesondere ist das Sitzrohr Teil eines Fahrradrahmens, wobei das Sitzrohr mit einem Oberrohr und einem Unterrohr verbunden ist, die wiederum mit einem Gabelrohr verbunden sind, wobei auch andere Rahmenkonstruktionen bekannt sind. Ferner ist das Sitzrohr bei einem ungefederten Rahmen mit Sitzstreben verbunden, die in Richtung des die Hinterradnabe aufnehmenden Ausfallendes verlaufen. Mit dem Sitzrohr sind ferner im Bereich der Tretlageraufnahme oder mit der Tretlageraufnahme selbst ebenfalls in Richtung des Ausfallendes verlaufende Kettenstreben verbunden. Die Ausgestaltung des Fahrradrahmens selbst ist jedoch von der Erfindung des Fahrradrahmenelements, das nur einen Teil des Fahrradrahmens darstellt, unabhängig.

Innerhalb des Sitzrohrs ist bei dem erfindungsgemäßen Fahrradrahmenelement ein Klemmelement angeordnet. Im Unterschied zu einer das Sitzrohr umgebenden Schelle ist das Klemmelement erfindungsgemäß innerhalb des Sitzrohrs angeordnet. Auf das Klemmelement wird zur Fixierung einer Sattelstütze, die einen Sattel trägt, eine Klemmkraft aufgebracht. Das Aufbringen der Klemmkraft erfolgt durch ein Klemmmittel wie eine Schraube, die im Sitzrohr angeordnet ist. Insbesondere weist das Sitzrohr ein Gewinde auf, in dem das Klemmmittel angeordnet ist. Erfindungsgemäß ist ferner zusätzlich zu dem Klemmelement ein Lagerelement vorgesehen, das im Endbereich des Sitzrohrs zur seitlichen Lagedefinition der Sattelstütze in montiertem Zustand vorgesehen ist. Der Endbereich des Sitzrohrs ist hierbei das nach oben offene Ende des Sitzrohrs, in das die Sattelstütze eingesteckt wird. Durch die erfindungsgemäße Kombination eines einerseits innerhalb des Sattelrohr angeordneten Klemmelements und eines im Endbereich des Sitzrohrs angeordneten Lagerelements kann eine sehr zuverlässige Fixierung der Sattelstütze im Sitzrohr gewährleistet werden.

Ferner besteht der wesentliche Vorteil, dass aufgrund der innerhalb des Sitzrohrs angeordneten Klemmung die Sattelstütze über einen längeren Bereich gebogen werden kann. Hierdurch ist der Sitzkomfort verbessert. Die Länge des Biegebereichs einer Sattelstütze ist der Teil der Sattelstütze, der sich in montiertem Zustand oberhalb der Klemmung befindet. Verglichen mit einer herkömmlichen, über eine Schelle fixierten Sattelstütze führt das Anordnen des Klemmelements in das Sattelrohr bereits zu einer Vergrößerung der Biegelänge. Da erfindungsgemäß im Endbereich des Sitzrohrs ein Lagerelement vorgesehen ist, kann das Klemmelement insbesondere mehrere Zentimeter innerhalb des Sitzrohrs angeordnet werden. Gemessen von einer Oberkante des Sitzrohrs ist es vorgesehen, dass das Klemmelement mindestens 5 cm, insbesondere mindestens 7 Zentimeter innerhalb des Sitzrohrs angeordnet ist. Da aufgrund des erfindungsgemäßen Klemmmechanismus keine das Sitzrohr umgebende Schelle mehr vorgesehen ist, ist es möglich, das Sitzrohr selbst zu verkürzen. Das Sitzrohr muss im Wesentlichen nicht mehr über das Oberrohr des Fahrradrahmens hervorstehen. Am Ende einer so definierten Oberseite eines Sitzrohrs ist die Klemmung vorzugsweise 5, insbesondere 7 cm innerhalb des Sitzrohrs angeordnet. Des Weiteren hat das Verkürzen des Sitzrohrs den weiteren Vorteil, dass der sich außerhalb des Sitzrohrs befindende Teil der Sattelstütze länger ist. Hierdurch ist wiederum die Biegelänge vergrößert und somit der Komfort verbessert.

Das Klemmelement weist einen Ansatz auf, der in montiertem Zustand in eine Ausnehmung des Sitzrohrs ragt. Bei der Ausnehmung handelt es sich vorzugsweise nicht um eine durchgehende Öffnung im Sitzrohr, sondern um eine auf der Innenseite des Sitzrohrs angeordnete Vertiefung, in die der Ansatz ragt. Hierdurch ist insbesondere die Lage des Klemmelements definiert. Des Weiteren kann hierdurch ein Klemmelement aus stärkerem Material vorgesehen sein, so dass die Kraftübertragung verbessert ist. Vorzugsweise wirkt das Klemmmittel wie die Schraube, ein Rastelement o.dgl. auf den Ansatz des Klemmelements ein.

Bei einer weiteren bevorzugten Ausführungsform ist das Klemmmittel derart angeordnet, dass es unmittelbar eine im Wesentlichen senkrecht zur Sattelstütze wirkende Klemmkraft erzeugt. Die Klemmkraft wird somit nicht wie beispielsweise mit einer Schelle oder einem Keil umgelenkt, um eine Klemmung hervorzurufen, sondern wirkt direkt senkrecht zur Sattelstütze. Dies hat den Vorteil, dass keine Kraftanteile verlorengehen. Bei einer Kraftumlenkung wird stets nur ein Teil der Kraft umgelenkt, so dass die erforderliche, von einem Klemmmittel aufzubringende Kraft größer als die tatsächlich erforderliche Klemmkraft ist. Bei der erfindungsgemäßen Anordnung des Klemmmittels derart, dass die Klemmkraft unmittelbar im Wesentlichen senkrecht zur Sattelstütze wirkt, muss keine oder nur eine geringe zusätzliche Kraft vom Klemmmittel aufgebracht werden. Die zusätzliche Kraft reduziert sich hierbei wesentlich auf die Reibungen. Derartige Reibungen treten beispielsweise unterhalb eines Schraubenkopfes auf. Eine weitere Reduzierung der erforderliche Kraft bzw. des erforderlichen Anzugsmoments kann daher dadurch erzielt werden, dass als Klemmmittel eine Madenschraube eingesetzt wird.

Des Weiteren ist es bevorzugt, dass das Klemmmittel in einer Rahmenmittelebene angeordnet ist. Die Rahmenmittelebene ist die Ebene, die bei einem stehenden Rad vertikal in der Mitte des Rahmens entsprechend einer Symmetrieebene verläuft.

Bei einer weiteren, besonders bevorzugten Ausführungsform ist das Klemmmittel zwischen den beiden insbesondere fest mit dem Sitzrohr oder dem Oberrohr des Rahmens verbundenen Sitzstreben angeordnet. Dies hat den Vorteil, dass in diesem Bereich bereits eine Materialanhäufung vorhanden ist oder auf einfache Weise vorgesehen werden kann. Eine derartige Materialanhäufung ist zweckmäßig, um insbesondere ein ausreichend langes Gewinde für eine Schraube oder ein anderes Klemmmittel vorzusehen. Des Weiteren ist die Anordnung des Klemmmittels zwischen den Sitzstreben vorteilhaft, da bei der bevorzugten Ausführungsform das Klemmmittel auf den Ansatz des Klemmelements wirkt und der Ansatz vorzugsweise in eine Ausnehmung oder Ausbuchtung des Sattelrohrs ragt. Diese Ausnehmung oder Ausbuchtung kann auf einfache Weise in dem Bereich zwischen den beiden Sitzstreben vorgesehen sein. Dies ist insbesondere vorteilhaft, da in diesem Bereich eine Materialanhäufung besteht oder auf einfache Weise vorgesehen werden kann, ohne die Aerodynamik und/oder das Design des Fahrradrahmens zu beeinträchtigen.

Das erfindungsgemäße Lagerelement, das zur seitlichen Lagedefinition der Sattelstütze im Endbereich des Sitzrohrs angeordnet ist, kann einstückig mit dem Fahrradrahmen ausgebildet sein. Dies ist insbesondere bei faserverstärkten Rahmen wie Rahmen aus CFK möglich. Vorzugsweise handelt es sich jedoch um ein Element, dass im Endbereich des Sitzrohrs angeordnet wird. Hierbei ist es insbesondere bevorzugt, dass das Lagerelement als geschlossener Ring ausgebildet ist. Der Querschnitt des Rings ist hierbei an den Querschnitt der Sattelstütze angepasst und kann beispielsweise auch oval sein. Vorzugsweise umgibt das Lagerelement in montiertem Zustand somit die Sattelstütze.

Insbesondere zur Vereinfachung der Montage und zur eindeutigen Lagedefinition ist es bevorzugt, dass das Lagerelement Ansätze aufweist, die in montiertem Zustand an einer Stirnseite des Sitzrohrs anliegen. Insbesondere ist anstatt eines oder mehrerer Ansätze ein umlaufender Bund vorgesehen, der somit flächig an der Stirnseite des Sitzrohres anliegt. Hierdurch ist das Risiko des Eindringens von Schmutz und Feuchtigkeit in das Sitzrohr verringert und ferner die Lage des Lagerelements eindeutig definiert.

Die Innenabmessungen, insbesondere der Innendurchmesser des Lagerelements entspricht vorzugsweise im Wesentlichen den Außenabmessungen der Sattelstütze. Es ist bevorzugt, dass in montiertem Zustand zwischen der Außenseite der Sattelstütze und der Innenseite des Lagerelements ein Abstand im Bereich von 0 - 0,5 mm besteht.

Das Klemmelement ist mit dem Lagerelement über einen Verbindungssteg verbunden. Insbesondere handelt es sich um ein einstückiges Formteil. Dieses ist vorzugsweise aus Kunststoff, insbesondere thermoplastischem Kunststoff, hergestellt.

Durch die Verbindung des Klemmelements mit dem Lagerelement über einen Verbindungssteg in einstückiger Ausgestaltung ist die Montage weiter vereinfacht, da nicht zwei gesonderte Bauteile montiert werden müssen. Ferner ist es möglich durch die Lagedefinition des Lagerelements automatisch auch die Lage des Klemmelements und umgekehrt zu definieren.

Ferner betrifft die Erfindung eine Halteeinrichtung zum Fixieren einer Sattelstütze in einem Sitzrohr eines Fahrradrahmens. Die Halteeinrichtung umfasst das Klemmelement und das Lagerelement wie es vorstehend anhand des Fahrradrahmenelements beschrieben ist. Insbesondere weist das Klemmelement somit den vorstehend beschriebenen Ansatz und das Lagerelement den insbesondere vorstehend beschriebenen Bund auf. Besonders bevorzugt ist es, dass die Halteeinrichtung einen Verbindungssteg aufweist, durch den das Klemmelement mit dem Lagerelement verbunden und insbesondere einstückig ausgebildet ist. Die Halteeinrichtung, bei der es sich in besonders bevorzugter Ausführungsform um ein einstückiges Formteil handelt, ist somit vorzugsweise wie vorstehend anhand des Fahrradrahmenelements beschrieben vorteilhaft weitergebildet.

Eine weitere unabhängige Erfindung betrifft einen Fahrradrahmen. Der Fahrradrahmen weist ein Sitzrohr und ein mit dem Sitzrohr verbundenes Oberrohr auf. Je nach Ausgestaltung des Fahrradrahmens ist ferner ein Unterrohr vorgesehen, wobei das Oberrohr und das Unterrohr über ein Gabelrohr miteinander verbunden sein können. Des Weiteren sind je nachdem, ob es sich um ein Nachfolgend werden die Erfindungen anhand eines gemeinsamen Ausführungsbeispiels näher erläutert.

Es zeigen:
- Fig. 1: eine schematische perspektivische Ansicht eines Fahrradrahmens, einer einstückigen Halteeinrichtung sowie einer Sattelstütze in unmontiertem Zustand und
- Fig. 2: eine schematische Schnittansicht der in Fig. 1 gezeigten Bauteile in montiertem Zustand.

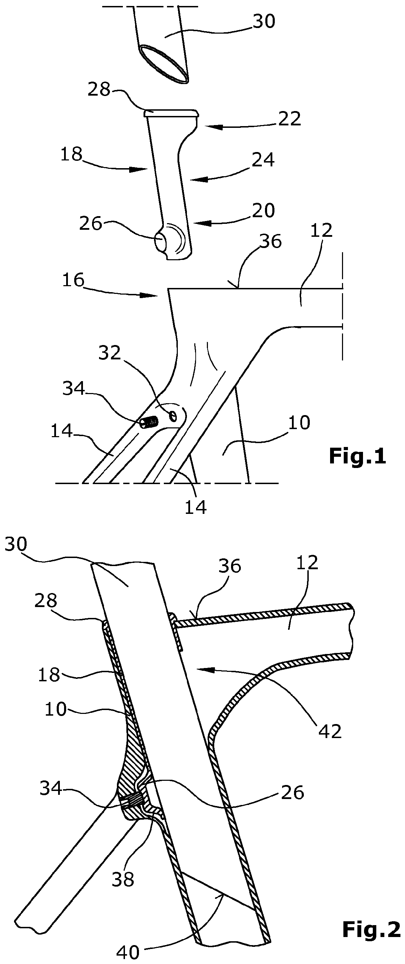

In Fig. 1 ist ein Ausschnitt eines Fahrradrahmens dargestellt. Gezeigt ist ein Teil eines Sitzrohrs 10, das mit einem Oberrohr 12 verbunden ist. Ferner sind Sitzstreben 14 dargestellt, die einerseits seitlich am Sitzrohr 10 vorbeigeführt und mit dem Oberrohr und andererseits auch mit dem Sitzrohr 10 verbunden sind. Bei dem dargestellten Fahrradrahmen handelt es sich insbesondere um einen Karbon-Rahmen. Ein Endbereich 16 des Sitzrohrs 10 endet auf Höhe des Oberrohrs bzw. ragt über die Oberseite des Oberrohrs nicht oder nur geringfügig vor.

Eine als einstückiges Formteil ausgebildete Halteeinrichtung 18 weist ein Klemmelement 20, ein Lagerelement 22 sowie einen das Klemmelement 20 mit dem Lagerelement 22 verbindenden Verbindungssteg 24 auf. Das Klemmelement weist einen im dargestellten Ausführungsbeispiel kegelstumpfförmigen Ansatz 26 auf.

Das Lagerelement 22 ist im dargestellten Ausführungsbeispiel kreisringförmig ausgebildet und weist einen Bund 28 auf, der radial nach außen vorsteht.

Des Weiteren ist in der Explosionszeichnung in Fig. 1 ein unteres Ende einer Sattelstütze 30 dargestellt.

Zwischen den beiden Sitzstreben 14 ist eine Materialanhäufung vorgesehen, in der eine Gewindebohrung 32 ausgebildet ist. In die Gewindebohrung 32 kann ein im dargestellten Ausführungsbeispiel als Madenschraube ausgebildetes Klemmmittel 34 eingeschraubt werden.

Zur Montage wird die im dargestellten Ausführungsbeispiel als einstückiges Formteil ausgebildete Halteeinrichtung 18 in das Sitzrohr 10 eingesteckt bis der Bund 28 an einer Stirnseite 36 des Sitzrohrs 10 anliegt. In dieser Stellung ragt der Ansatz 26 des Klemmelements 20 in eine Ausnehmung 38 des Sitzrohrs 10. Die Ausnehmung 38 ist im dargestellten Ausführungsbeispiel als Einbuchtung an der Innenseite des Sitzrohrs 10 ausgebildet. Die Ausnehmung 38 ist zwischen den beiden Sitzstreben 14 angeordnet, da in diesem Bereich auch eine Materialanhäufung vorgesehen werden kann oder aus Stabilitätsgründen bereits vorgesehen ist.

Anschließend wird die Sattelstütze 30 in das im dargestellten Ausführungsbeispiel ringförmige Lagerelement 22 eingeführt, bis ein unteres Ende 40 der Sattelstütze 30 unterhalb des Klemmelementes 20 angeordnet ist. Anschließend kann auf einfache Weise ein Fixieren der Sattelstütze 30 im Sitzrohr 10 erfolgen, indem das als Madenschraube ausgebildete Klemmmittel 34 eingeschraubt wird. Bereits bei einem geringen Drehmoment wirkt eine ausreichende Kraft von der Madenschraube 34 auf den Ansatz 26 des Klemmelements 20, so dass bereits bei einer relativ geringen Kraft eine ausreichende Fixierung der Sattelstütze 30 in dem Sitzrohr 10 gewährleistet ist.

Insbesondere bei Verwendung der erfindungsgemäßen Halteeinrichtung 18 ist es möglich, einen Fahrradrahmen derart auszugestalten, dass zwischen dem Sitzrohr 10 und dem Oberrohr 12 eine Öffnung 42 ausgebildet ist. Die Öffnung 42 weist hierbei vorzugsweise den Innenquerschnitt des gesamten Oberrohrs im Bereich der Verbindung zwischen Oberrohr 12 und Sitzrohr 10 auf. Hierdurch kann insbesondere bei Karbon-Rahmen ein vorteilhafter Faserverlauf realisiert werden. Das Vorsehen der Öffnung 42 ist möglich, da das Sattelrohr einerseits unterhalb der Öffnung 42 durch das Klemmelement 20 in Verbindung mit dem Klemmmittel 34 geklemmt ist und andererseits mit Hilfe des

Lagerelements 22 oberhalb der Öffnung 42 zur seitlichen Lagedefinition der Sattelstütze 30 definiert gehalten ist.

## Patentansprüche

1. Fahrradrahmenelement, mit
einem Sitzrohr (10),
einem innerhalb des Sitzrohrs (10) angeordneten Klemmelement (20), auf das durch ein im Sitzrohr (10) angeordnetes Klemmmittel (34) eine Klemmkraft zum Fixieren einer Sattelstütze (30) im Sitzrohr (10) wirkt und
einem im Endbereich (16) des Sitzrohrs (10) angeordneten Lagerelement (22) zur seitlichen Lagedefinition der Sattelstütze (30) wobei das Klemmelement (20) mit dem Lagerelement (22) über einen Verbindungssteg (24) verbunden ist, wobei die Bauteile als einstückige Halteeinrichtung (18) ausgebildet sind,
**dadurch gekennzeichnet, dass** das Klemmelement (20) einen Ansatz (26) aufweist, der in montiertem Zustand in eine Ausnehmung (38) des Sitzrohrs (10) ragt, wobei das Klemmmittel (34) vorzugsweise auf den Ansatz (26) wirkt.

2. Fahrradrahmenelement nach Anspruch 1, **dadurch gekennzeichnet, dass** das Klemmmitteil (34) unmittelbar eine im Wesentlichen senkrecht zur Sattelstütze (30) wirkende Klemmkraft erzeugt.

3. Fahrradrahmenelement nach einem der Ansprüche 1 bis 2, **dadurch gekennzeichnet, dass** das Klemmmittel (34) in der Rahmenmittelebene eines Fahrradrahmens angeordnet werden kann.

4. Fahrradrahmenelement nach einem der Ansprüche 1 bis 3, **dadurch gekennzeichnet, dass** das Klemmmittel (34) zwischen zwei Sitzstreben (14) eines Fahrradrahmens angeordnet werden kann, die vorzugsweise mit dem Sitzrohr (10) des Fahrradrahmens verbunden sind.

5. Fahrradrahmenelement nach einem der Ansprüche 1 bis 4, **dadurch gekennzeichnet, dass** das Lagerelement (22) geschlossen, insbesondere ringförmig ausgebildet ist, um in montiertem Zustand die Sattelstütze (30) zu umgeben.

6. Fahrradrahmenelement nach einem der Ansprüche 1 bis 5, **dadurch gekennzeichnet, dass** das Lagerelement (22) einen vorzugsweise umlaufenden, an einer Stirnseite (36) des Sitzrohrs (10) in montiertem Zustand anliegenden Bund (28) aufweist.

7. Fahrradrahmenelement nach einem der Ansprüche 1 bis 6, **dadurch gekennzeichnet, dass** die Innenabmessung des Lagerelements (22) im Wesentlichen der Außenabmessung der Sattelstütze (30) entspricht.

8. Fahrradrahmen mit einem Fahrradrahmenelement nach einem der vorangehenden Ansprüche.

9. Fahrradrahmen nach Anspruch 8, **dadurch gekennzeichnet, dass** das Klemmmittel (34) in der Rahmenmittelebene angeordnet ist.

10. Fahrradrahmen nach Anspruch 8 oder 9, **dadurch gekennzeichnet, dass** der Fahrradrahmen zwei Sitzstreben (14) aufweist, die vorzugsweise mit dem Sitzrohr (10) verbunden sind, wobei das Klemmmittel (34) zwischen den zwei Sitzstreben (14) angeordnet ist.

## Claims

1. A bicycle frame element, comprising
a seat tube (10),
a clamping element (20) arranged within the seat tube (10), wherein said clamping element, with the aid of a clamping means (34) arranged in the seat tube (10), is subjected to a clamping force for fixing a seatpost (30) in the seat tube (10), and
a support element (22) arranged in the end region (16) of the seat tube (10) for lateral position definition of the seatpost (30), wherein the clamping element (20) is connected to the support element (22) via a connection web (24), wherein the component parts are formed as a one-pieced holding device (18),
**characterized in that** the clamping element (20) comprises a projection (26) which in the assembled state extends into a recess (38) of the seat tube (10), wherein the clamping means (34) preferably acts on the projection (26).

2. The bicycle frame element according to claim 1, **characterized in that** the clamping means (34) directly generates a clamping force acting substantially vertically to the seatpost (30).

3. The bicycle frame element according to any one of claims 1 to 2, **characterized in that** the clamping means (34) can be arranged in the frame central plane of a bicycle frame.

4. The bicycle frame element according to any one of claims 1 to 3, **characterized in that** the clamping means (34) can be arranged between two seat stays (14) of a bicycle frame that preferably are connected to the seat tube (10) of the bicycle frame.

5. The bicycle frame element according to any one of claims 1 to 4, **characterized in that** the support element (22) is closed, preferably has an annular configuration, to surround the seatpost (30) in the assembled state.

6. The bicycle frame element according to any one of claims 1 to 5, **characterized in that** the support element (22) comprises a preferably continuously surrounding collar (28) which in the assembled state is in abutment on an end side (36) of the seat tube (10).

7. The bicycle frame element according to any one of claims 1 to 6, **characterized in that** the inner dimensioning of the support element (22) substantially corresponds to the outer dimensioning of the seatpost (30).

8. A bicycle frame comprising a bicycle frame element according to any one of the preceding claims.

9. The bicycle frame according to claim 8, **characterized in that** the clamping means (34) is arranged in the frame central plane.

10. The bicycle frame according to claim 8 or 9, **characterized in that** the bicycle frame comprises two seat stays (14) which preferably are connected to the seat tube (10), wherein the clamping means (34) is arranged between the two seat stays (14).

## Revendications

1. Elément de cadre de vélo avec
un tube de selle (10),
un élément de serrage (20) disposé à l'intérieur du tube de selle (10), sur lequel un effort de serrage pour fixer une tige de selle (30) à l'intérieur du tube de selle (10) agit par un moyen de serrage (34) disposé dans le tube de selle (10) et
un élément de support (22) disposé dans une zone d'extrémité (16) du tube de selle (10) pour une définition latérale de la tige de selle (30), l'élément de serrage (20) étant relié à l'élément de support (22) par une barre de jonction (24), les composants étant configurés comme un dispositif de maintien (18) en une seule pièce,
**caractérisé en ce que** l'élément de serrage (20) comprend une extension (26) qui s'étend, en l'état monté, dans un évidement (38) du tube de selle (10), le moyen de serrage (34) agissant, de préférence, sur l'extension (26).

2. Elément de cadre de vélo selon la revendication 1, **caractérisé en ce que** le moyen de serrage (34) engendre directement un effort de serrage agissant sensiblement perpendiculairement à la tige de selle (30).

3. Elément de cadre de vélo selon l'une des revendications 1 à 2, **caractérisé en ce que** le moyen de serrage (34) est adapté pour pouvoir être disposé dans le plan médian de cadre d'un cadre de vélo.

4. Elément de cadre de vélo selon l'une des revendications 1 à 3, **caractérisé en ce que** le moyen de serrage (34) est adapté pour pouvoir être disposé entre deux barres de selle (14) d'un cadre de vélo, qui sont reliées, de préférence, au tube de selle (10) du cadre de vélo.

5. Elément de cadre de vélo selon l'une des revendications 1 à 4, **caractérisé en ce que** l'élément de support (22) est configuré fermé, notamment en la forme d'un anneau, afin d'entourer, en l'état monté, la tige de selle (30).

6. Elément de cadre de vélo selon l'une des revendications 1 à 5, **caractérisé en ce que** l'élément de support (22) comprend un rebord (28), de préférence périphérique, en appui, en l'état monté, sur une face frontale (36) du tube de selle (10).

7. Elément de cadre de vélo selon l'une des revendications 1 à 6, **caractérisé en ce que** les dimensions intérieures de l'élément de support (22) correspondent sensiblement aux dimensions extérieures de la tige de selle (30).

8. Cadre de vélo avec un élément de cadre de vélo selon l'une des revendications précédentes.

9. Cadre de vélo selon la revendication 8, **caractérisé en ce que** l'élément de serrage (34) est disposé dans le plan médian de cadre.

10. Cadre de vélo selon la revendication 8 ou 9, **caractérisé en ce que** le cadre de vélo comprend deux barres de selle (14) qui, de préférence, sont reliées au tube de selle (10), le moyen de serrage (34) étant disposé entre les deux barres de selle (14).
